# EUROPEAN PATENT APPLICATION

(11) **EP 4 481 256 A1**
(43) Date of publication of application: **25.12.2024**
(21) Application number: 22926680.4
(22) Date of filing: 15.07.2022
(51) Int. Cl.: F16L 51/00, F16L 27/08

(54) **INTERNAL PRESSURE SELF-SEALING ROTARY COMPENSATOR**

(30) Priority: 15.02.2022 CN 202210135476
(71) Applicant: Song, Zhanggen, Wuxi, Jiangsu 214212 (CN); Song, Suwei, Wuxi, Jiangsu 214212 (CN); Song, Zhicheng, Wuxi, Jiangsu 214212 (CN)
(72) Inventor: ZHANG, Jie, Wuxi, Jiangsu 214212 (CN); LI, Tianhong, Wuxi, Jiangsu 214212 (CN); SONG, Zhanggen, Wuxi, Jiangsu 214212 (CN); SONG, Suwei, Wuxi, Jiangsu 214212 (CN); SONG, Zhicheng, Wuxi, Jiangsu 214212 (CN)
(74) Representative: karo IP
(86) International application number: PCT/CN2022/105902
(87) International publication number: WO 2023/155374

(57) **Abstract**

An internal pressure self-sealing rotary compensator, which comprises a fixed pipe (1) and a rotatable pipe (2); an end portion of the fixed pipe has a conical opening, the conical opening end thereof is connected to a sealing base (3), and an inner cavity of the sealing base is provided with an inwardly protruding rotating base (4); an annular face sealing piece (5) is installed on an outer side of the rotating base, and the annular face sealing piece (5) is fixed in an annular face sealing cavity by means of a gland (6); an end face self-sealing piece (7) is installed on an inner side of the rotating base, an outer side face of the end face self-sealing piece abuts against an arc-shaped annular protruding face (8) on the rotatable pipe, an outer section of the arc-shaped annular protruding face smoothly transitions with a first outer conical face (9) at the end of the rotatable pipe, and an inner section of the arc-shaped annular protruding face intersects with an outer surface of the rotatable pipe; the first outer conical face is connected to a second outer conical face (10), and the taper of the second outer conical face matches with the taper of the conical opening of the end portion of the fixed pipe. The present internal pressure self-sealing rotary compensator is simple in structure, convenient to manufacture, a performance index of an end face sealing piece can be lowered, and production costs can be reduced.

## Description

### TECHNICAL FIELD

The present invention relates to a compensation technology, particularly a device for compensating the length of a conveying pipeline, specifically an internal pressure self-sealing rotary compensator.

### BACKGROUND

At present, the rotary compensator from Chinese patent ZL2006100413011 has been promoted and widely used, and this compensator can meet the compensation of large pipe diameter and long distance through a reasonable combination, and has been applied to various kinds of gas-liquid conveying pipelines, which greatly reduces the cost of pipeline compensation and improves the safety. However, the applicant found during use that an existing compensator must be equipped with a high-pressure resistant sealing ring, and that the requirements for sealing performance and pressure resistance of the sealing ring are too high, and that the sealing ring is easily damaged during use, so that it is necessary to replace the sealing ring regularly to ensure safe operation. This situation is closely related to a structure of the compensator. Therefore, changing a sealing structure of the compensator and increasing conical face sealing under the premise of retaining the end face sealing and the annular face sealing is the key to improve the long-term safe operation of the rotary compensator.

### SUMMARY

An objective of the present invention is to design an internal pressure self-sealing rotary compensator increased with a conical face for the problem that an existing rotary compensator is difficult to meet the long-term safe operation relying on single end face sealing. The conical face sealing can achieve the advantage that the higher the pressure, the better the sealing performance.

A first technical solution of the present invention is as follows:
an internal pressure self-sealing rotary compensator includes a fixed pipe 1 and a rotatable pipe 2, where body parts of the fixed pipe 1 and the rotatable pipe 2 have the same inner diameter, an end portion of the fixed pipe 1 has a conical opening forming a reducer, the conical opening end thereof is connected to a sealing base 3, an inner cavity of the sealing base 3 is provided with an inwardly protruding rotating base 4, and an inner diameter of the rotating base 4 is matched with an outer diameter of the rotatable pipe 2; an annular face sealing piece 5 is installed on an outer side of the rotating base 4, and the annular face sealing piece 5 is fixed, by means of a gland 6, in an annular face sealing cavity including an outer end face of the rotating base 2, an inner surface of the sealing base 3 and the rotatable pipe 2; the gland 6 is connected to the sealing base 3 by means of a fastener 12; an end face self-sealing piece 7 is installed on an inner side of the rotating base 4, an outer side face of the end face self-sealing piece 7 abuts against an arc-shaped annular protruding face 8 on the rotatable pipe 2, an outer section of the arc-shaped annular protruding face 8 smoothly transitions with a first outer conical face 9 of an end portion of the rotatable pipe 2, and an inner section of the arc-shaped annular protruding face 8 intersects with an outer surface of the rotatable pipe 2; and the taper of the first outer conical face 9 is matched with the taper of an inner conical face of an end portion of the sealing base 3, the first outer conical face 9 is connected to a second outer conical face 10, and the taper of the second outer conical face 10 is matched with the taper of the conical opening of the end portion of the fixed pipe 1.

A conical face sealing structure is formed between the first outer conical face 9 and the inner conical face of the sealing base 3. A pressure equalization cavity is surrounded by a lower arc section of the arc-shaped annular protruding face, the outer side face of the end face sealing piece and the outer surface of the rotatable pipe.

A self-sealing piece 11 is fitted in the conical face sealing structure.

A second technical solution of the present invention is as follows:
an internal pressure self-sealing rotary compensator includes a fixed pipe 1 and a rotatable pipe 2, where body parts of the fixed pipe 1 and the rotatable pipe 2 have the same inner diameter, an end portion of the fixed pipe 1 has a conical opening forming a reducer, the conical opening end thereof is connected to a sealing base 3, an inner cavity of the sealing base 3 is provided with a rotating base 4 including a vertical end face perpendicular to an axis of the rotatable pipe 2, an annular face parallel to the axis and a conical face at an acute angle to the axis, and an inner diameter of the annular face is matched with an outer diameter of the rotatable pipe 2; an annular face sealing cavity is formed among the vertical end face of the rotating base 4, an inner annular face connected to the vertical end face and an outer surface of the rotatable pipe 2, an annular face sealing piece 5 is installed in the annular face sealing cavity and is axially positioned by means of a gland 6, and the gland 6 is connected to the sealing base 3 by means of a fastener 12; and an end portion of the rotatable pipe 2 is provided with a first outer conical face 9 matched with the conical face to achieve conical face sealing, and the first outer conical face 9 is connected to a second outer conical face 10 having a taper matched with the taper of the tapered opening of the end portion of the fixed pipe 1.

A self-sealing piece 11 is installed in a conical face sealing structure formed between the first outer conical face 9 and the conical face of the sealing base 3.

A third technical solution of the present invention is as follows:
an internal pressure self-sealing rotary compensator includes a fixed pipe 1 and a rotatable pipe 2, where body parts of the fixed pipe 1 and the rotatable pipe 2 have the same inner diameter, an end portion of the fixed pipe 1 has a conical opening forming a reducer, the conical opening end thereof is connected to a sealing base 3, an inner cavity of the sealing base 3 is provided with a rotating base 4 including a polyhedron, the polyhedron includes a first end face 401, a second end face 402, a first annular face 403 and a third conical face 404, an end portion of the rotatable pipe 2 is provided with a first conical face 9 matched with the third conical face 404 to achieve conical face sealing, a third end face 901 connected to the first conical face 9, a second annular face 902 connected to the third end face 901 and a second outer conical face 10 connected to the second annular face 902, and a self-sealing cavity for installing an end face self-sealing piece 7 is formed between the second end face 402 and the third end face 901; the taper of the second outer conical face 10 is matched with the taper of the conical opening of the end portion of the fixed pipe 1; an inner diameter of the first annular face 403 is matched with an outer diameter of the rotatable pipe 2; and an annular face sealing cavity for installing an annular face sealing piece 5 is formed among the first end face 401, a third annular face 301 of the sealing base 3 and an outer surface of the rotatable pipe 2, the annular face sealing piece 5 is axially positioned by means of a gland 6, and the gland 6 is connected to the sealing base 3 by means of a fastener 12.

A self-sealing piece 11 is installed in a conical face sealing structure formed between the first outer conical face 9 and the third conical face 404.

A fourth technical solution of the present invention is as follows:
an internal pressure self-sealing rotary compensator includes a fixed pipe 1 and a rotatable pipe 2, where body parts of the fixed pipe 1 and the rotatable pipe 2 have the same inner diameter, an end portion of the fixed pipe 1 has a conical opening forming a reducer, the conical opening end thereof is connected to a sealing base 3, an inner cavity of the sealing base 3 is provided with a rotating base 4 including a polyhedron, the polyhedron includes a first end face 401, a second end face 402, a first annular face 403, a third conical face 404 and a fourth end face 405, an end portion of the rotatable pipe 2 is provided with a first conical face 9 matched with the third conical face 404 to achieve conical face sealing, a third end face 901 connected to one end of the first conical face 9, a fifth end face 905 connected to the other end of the first conical face, a second annular face 902 connected to the third end face 901 and a second outer conical face 10 connected to the second annular face 902, a first self-sealing cavity for installing an end face self-sealing piece 7 is formed between the second end face 402 and the third end face 901, and a second self-sealing cavity for installing the end face self-sealing piece 7 is formed between the fourth end face 405 and the fifth end face 905; the taper of the second outer conical face 10 is matched with the taper of the conical opening of the end portion of the fixed pipe 1; an inner diameter of the first annular face 403 is matched with an outer diameter of the rotatable pipe 2; and an annular face sealing cavity for installing an annular face sealing piece 5 is formed among the first end face 401, a third annular face 301 of the sealing base 3 and an outer surface of the rotatable pipe 2, the annular face sealing piece 5 is axially positioned by means of a gland 6, and the gland 6 is connected to the sealing base 3 by means of a fastener 12.

A self-sealing piece 11 is installed in a conical face sealing structure formed between the first outer conical face 9 and the third conical face 404.

The present invention has the following beneficial effects:
according to the present invention, the high-pressure sealing performance is further improved by increasing conical face sealing, which is a supplement and an improvement to the end face sealing.

The internal pressure self-sealing rotary compensator is simple in structure and convenient to manufacture, a performance index of an end face sealing piece can be lowered, and production costs can be reduced.

### BRIEF DESCRIPTION OF THE DRAWINGS

FIG. 1 is a first schematic structural diagram of the present invention;
FIG. 2 is a second schematic structural diagram of the present invention;
FIG. 3 is a third schematic structural diagram of the present invention; and
FIG. 4 is a fourth schematic structural diagram of the present invention.

### DETAILED DESCRIPTION OF EMBODIMENTS

The present invention is further described with reference to the accompanying drawings and embodiments.

### Embodiment 1.

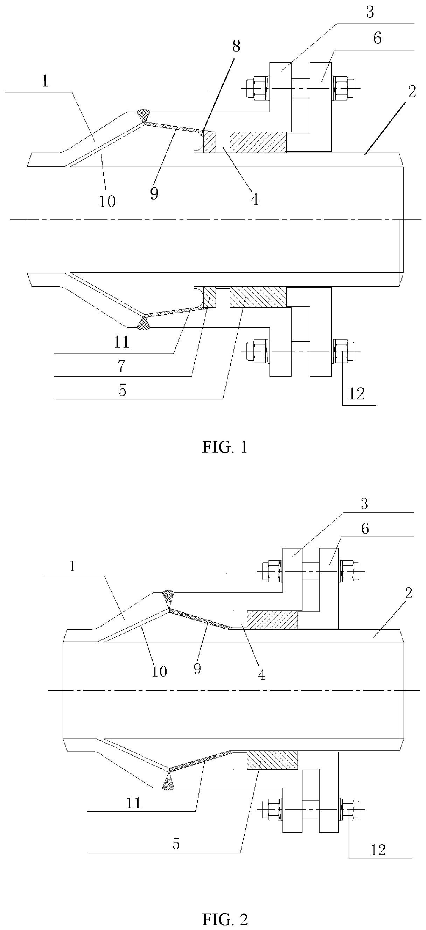

As shown in FIG. 1.

An internal pressure self-sealing rotary compensator includes a fixed pipe 1 and a rotatable pipe 2, where body parts of the fixed pipe 1 and the rotatable pipe 2 have the same inner diameter, an end portion of the fixed pipe 1 has a conical opening forming a reducer, and the conical opening end thereof is connected to a sealing base 3 by welding, as shown in FIG. 1. An inner cavity of the sealing base 3 is provided with an inwardly protruding rotating base 4, and an inner diameter of the rotating base 4 is matched with an outer diameter of the rotatable pipe 2; an annular face sealing piece 5 (which may employ a conventional pressure resistant sealing piece or powder) is installed on an outer side of the rotating base 4, and the annular face sealing piece 5 is fixed, by means of a gland 6, in an annular face sealing cavity including an outer end face of the rotating base 2, an inner surface of the sealing base 3 and the rotatable pipe 2; the gland 6 is connected to the sealing base 3 by means of a fastener 12 (a bolt-and-nut structure, the same below); an end face self-sealing piece 7 is installed on an inner side of the rotating base 4, an outer side face of the end face self-sealing piece 7 (which may employ the structure disclosed in Chinese Patent 200810023454.5, the same below) abuts against an arc-shaped annular protruding face 8 on the rotatable pipe 2, an outer section of the arc-shaped annular protruding face 8 smoothly transitions with a first outer conical face 9 of an end portion of the rotatable pipe 2, and an inner section of the arc-shaped annular protruding face 8 intersects with an outer surface of the rotatable pipe 2; and the taper of the first outer conical face 9 is matched with the taper of an inner conical face of an end portion of the sealing base 3, the first outer conical face 9 is connected to a second outer conical face 10, and the taper of the second outer conical face 10 is matched with the taper of the conical opening of the end portion of the fixed pipe 1. A conical face sealing structure is formed between the first outer conical face 9 and the inner conical face of the sealing base 3. A pressure equalization cavity is surrounded by a lower arc section of the arc-shaped annular protruding face, the outer side face of the end face sealing piece and the outer surface of the rotatable pipe. A self-sealing piece 11 (which may employ a conventional pressure-resistant sealing piece or powder) is fitted in the conical face sealing structure.

### Embodiment 2.

As shown in FIG. 2.

An internal pressure self-sealing rotary compensator includes a fixed pipe 1 and a rotatable pipe 2, where body parts of the fixed pipe 1 and the rotatable pipe 2 have the same inner diameter, an end portion of the fixed pipe 1 has a conical opening forming a reducer, the conical opening end thereof is connected to a sealing base 3, an inner cavity of the sealing base 3 is provided with a rotating base 4 including a vertical end face perpendicular to an axis of the rotatable pipe 2, an annular face parallel to the axis and a conical face at an acute angle to the axis, and an inner diameter of the annular face is matched with an outer diameter of the rotatable pipe 2; an annular face sealing cavity is formed among the vertical end face of the rotating base 4, an inner annular face connected to the vertical end face and an outer surface of the rotatable pipe 2, an annular face sealing piece 5 is installed in the annular face sealing cavity and is axially positioned by means of a gland 6, and the gland 6 is connected to the sealing base 3 by means of a fastener 12; and an end portion of the rotatable pipe 2 is provided with a first outer conical face 9 matched with the conical face to achieve conical face sealing, and the first outer conical face 9 is connected to a second outer conical face 10 having a taper matched with the taper of the tapered opening of the end portion of the fixed pipe 1. A self-sealing piece 11 is installed in a conical face sealing structure formed between the first outer conical face 9 and the conical face of the sealing base 3.

### Embodiment 3.

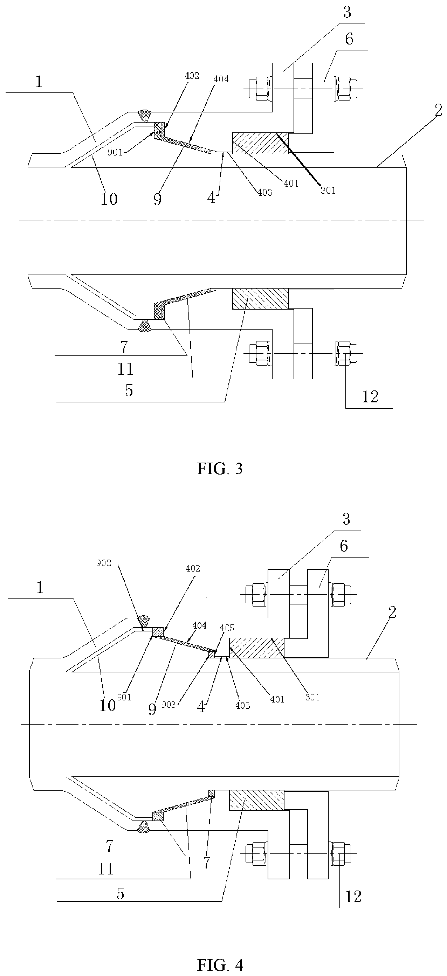

As shown in FIG. 3.

An internal pressure self-sealing rotary compensator includes a fixed pipe 1 and a rotatable pipe 2, where body parts of the fixed pipe 1 and the rotatable pipe 2 have the same inner diameter, an end portion of the fixed pipe 1 has a conical opening forming a reducer, the conical opening end thereof is connected to a sealing base 3 by welding, an inner cavity of the sealing base 3 is provided with a rotating base 4 including a polyhedron, the polyhedron includes a first end face 401, a second end face 402, a first annular face 403 and a third conical face 404, an end portion of the rotatable pipe 2 is provided with a first conical face 9 matched with the third conical face 404 to achieve conical face sealing, a third end face 901 connected to the first conical face 9, a second annular face 902 connected to the third end face 901 and a second outer conical face 10 connected to the second annular face 902, and a self-sealing cavity for installing an end face self-sealing piece 7 is formed between the second end face 402 and the third end face 901; the taper of the second outer conical face 10 is matched with the taper of the conical opening of the end portion of the fixed pipe 1; an inner diameter of the first annular face 403 is matched with an outer diameter of the rotatable pipe 2; and an annular face sealing cavity for installing an annular face sealing piece 5 is formed among the first end face 401, a third annular face 301 of the sealing base 3 and an outer surface of the rotatable pipe 2, the annular face sealing piece 5 is axially positioned by means of a gland 6, and the gland 6 is connected to the sealing base 3 by means of a fastener 12.

A self-sealing piece 11 is installed in a conical face sealing structure formed between the first outer conical face 9 and the third conical face 404.

### Embodiment 4.

As shown in FIG. 4.

An internal pressure self-sealing rotary compensator includes a fixed pipe 1 and a rotatable pipe 2, where body parts of the fixed pipe 1 and the rotatable pipe 2 have the same inner diameter, an end portion of the fixed pipe 1 has a conical opening forming a reducer, the conical opening end thereof is connected to a sealing base 3 by welding, an inner cavity of the sealing base 3 is provided with a rotating base 4 including a polyhedron, the polyhedron includes a first end face 401, a second end face 402, a first annular face 403, a third conical face 404 and a fourth end face 405, an end portion of the rotatable pipe 2 is provided with a first conical face 9 matched with the third conical face 404 to achieve conical face sealing, a third end face 901 connected to one end of the first conical face 9, a fifth end face 905 connected to the other end of the first conical face, a second annular face 902 connected to the third end face 901 and a second outer conical face 10 connected to the second annular face 902, a first self-sealing cavity for installing an end face self-sealing piece 7 is formed between the second end face 402 and the third end face 901, and a second self-sealing cavity for installing the end face self-sealing piece 7 is formed between the fourth end face 405 and the fifth end face 905; the taper of the second outer conical face 10 is matched with the taper of the conical opening of the end portion of the fixed pipe 1; an inner diameter of the first annular face 403 is matched with an outer diameter of the rotatable pipe 2; and an annular face sealing cavity for installing an annular face sealing piece 5 is formed among the first end face 401, a third annular face 301 of the sealing base 3 and an outer surface of the rotatable pipe 2, the annular face sealing piece 5 is axially positioned by means of a gland 6, and the gland 6 is connected to the sealing base 3 by means of a fastener 12. A self-sealing piece 11 is installed in a conical face sealing structure formed between the first outer conical face 9 and the third conical face 404.

Parts not involved in the present invention are the same as those of the prior art or can be implemented by using the prior art.

## Claims

1. An internal pressure self-sealing rotary compensator, comprising a fixed pipe (1) and a rotatable pipe (2), wherein body parts of the fixed pipe (1) and the rotatable pipe (2) have the same inner diameter, an end portion of the fixed pipe (1) has a conical opening forming a reducer, the conical opening end thereof is connected to a sealing base (3), an inner cavity of the sealing base (3) is provided with an inwardly protruding rotating base (4), and an inner diameter of the rotating base (4) is matched with an outer diameter of the rotatable pipe (2); an annular face sealing piece (5) is installed on an outer side of the rotating base (4), and the annular face sealing piece (5) is fixed, by means of a gland (6), in an annular face sealing cavity comprising an outer end face of the rotating base (2), an inner surface of the sealing base (3) and the rotatable pipe (2); the gland (6) is connected to the sealing base (3) by means of a fastener (12); an end face self-sealing piece (7) is installed on an inner side of the rotating base (4), an outer side face of the end face self-sealing piece (7) abuts against an arc-shaped annular protruding face (8) on the rotatable pipe (2), an outer section of the arc-shaped annular protruding face (8) smoothly transitions with a first outer conical face (9) of an end portion of the rotatable pipe (2), and an inner section of the arc-shaped annular protruding face (8) intersects with an outer surface of the rotatable pipe (2); and the taper of the first outer conical face (9) is matched with the taper of an inner conical face of an end portion of the sealing base (3), the first outer conical face (9) is connected to a second outer conical face (10), and the taper of the second outer conical face (10) is matched with the taper of the conical opening of the end portion of the fixed pipe (1).

2. The internal pressure self-sealing rotary compensator according to claim 1, wherein a conical face sealing structure is formed between the first outer conical face (9) and the inner conical face of the sealing base (3).

3. The internal pressure self-sealing rotary compensator according to claim 2, wherein a self-sealing piece (11) is fitted in the conical face sealing structure.

4. An internal pressure self-sealing rotary compensator, comprising a fixed pipe (1) and a rotatable pipe (2), wherein body parts of the fixed pipe (1) and the rotatable pipe (2) have the same inner diameter, an end portion of the fixed pipe (1) has a conical opening forming a reducer, the conical opening end thereof is connected to a sealing base (3), an inner cavity of the sealing base (3) is provided with a rotating base (4) comprising a vertical end face perpendicular to an axis of the rotatable pipe (2), an annular face parallel to the axis and a conical face at an acute angle to the axis, and an inner diameter of the annular face is matched with an outer diameter of the rotatable pipe (2); an annular face sealing cavity is formed among the vertical end face of the rotating base (4), an inner annular face connected to the vertical end face and an outer surface of the rotatable pipe (2), an annular face sealing piece (5) is installed in the annular face sealing cavity and is axially positioned by means of a gland (6), and the gland (6) is connected to the sealing base (3) by means of a fastener (12); and an end portion of the rotatable pipe (2) is provided with a first outer conical face (9) that is matched with the conical face to achieve conical face sealing, and the first outer conical face (9) is connected to a second outer conical face (10) having a taper matched with the taper of the tapered opening of the end portion of the fixed pipe (1).

5. The internal pressure self-sealing rotary compensator according to claim 4, wherein a self-sealing piece (11) is installed in a conical face sealing structure formed between the first outer conical face (9) and the conical face of the sealing base (3).

6. An internal pressure self-sealing rotary compensator, comprising a fixed pipe (1) and a rotatable pipe (2), wherein body parts of the fixed pipe (1) and the rotatable pipe (2) have the same inner diameter, an end portion of the fixed pipe (1) has a conical opening forming a reducer, the conical opening end thereof is connected to a sealing base (3), an inner cavity of the sealing base (3) is provided with a rotating base (4) comprising a polyhedron, the polyhedron comprises a first end face (401), a second end face (402), a first annular face (403) and a third conical face (404), an end portion of the rotatable pipe (2) is provided with a first conical face (9) matched with the third conical face (404) to achieve conical face sealing, a third end face (901) connected to the first conical face (9), a second annular face (902) connected to the third end face (901) and a second outer conical face (10) connected to the second annular face (902), and a self-sealing cavity for installing an end face self-sealing piece (7) is formed between the second end face (402) and the third end face (901); the taper of the second outer conical face (10) is matched with the taper of the conical opening of the end portion of the fixed pipe (1); an inner diameter of the first annular face (403) is matched with an outer diameter of the rotatable pipe (2); and an annular face sealing cavity for installing an annular face sealing piece (5) is formed among the first end face (401), a third annular face (301) of the sealing base (3) and an outer surface of the rotatable pipe (2), the annular face sealing piece (5) is axially positioned by means of a gland (6), and the gland (6) is connected to the sealing base (3) by means of a fastener (12).

7. The internal pressure self-sealing rotary compensator according to claim 6, wherein a self-sealing piece (11) is installed in a conical face sealing structure formed between the first outer conical face (9) and the third conical face (404).

8. An internal pressure self-sealing rotary compensator, comprising a fixed pipe (1) and a rotatable pipe (2), wherein body parts of the fixed pipe (1) and the rotatable pipe (2) have the same inner diameter, an end portion of the fixed pipe (1) has a conical opening forming a reducer, the conical opening end thereof is connected to a sealing base (3), an inner cavity of the sealing base (3) is provided with a rotating base (4) comprising a polyhedron, the polyhedron comprises a first end face (401), a second end face (402), a first annular face (403), a third conical face (404) and a fourth end face (405), an end portion of the rotatable pipe (2) is provided with a first conical face (9) matched with the third conical face (404) to achieve conical face sealing, a third end face (901) connected to one end of the first conical face (9), a fifth end face (905) connected to the other end of the first conical face, a second annular face (902) connected to the third end face (901) and a second outer conical face (10) connected to the second annular face (902), a first self-sealing cavity for installing an end face self-sealing piece (7) is formed between the second end face (402) and the third end face (901), and a second self-sealing cavity for installing the end face self-sealing piece (7) is formed between the fourth end face (405) and the fifth end face (905); the taper of the second outer conical face (10) is matched with the taper of the conical opening of the end portion of the fixed pipe (1); an inner diameter of the first annular face (403) is matched with an outer diameter of the rotatable pipe (2); and an annular face sealing cavity for installing an annular face sealing piece (5) is formed among the first end face (401), a third annular face (301) of the sealing base (3) and an outer surface of the rotatable pipe (2), the annular face sealing piece (5) is axially positioned by means of a gland (6), and the gland (6) is connected to the sealing base (3) by means of a fastener (12).

9. The internal pressure self-sealing rotary compensator according to claim 8, wherein a self-sealing piece (11) is installed in a conical face sealing structure formed between the first outer conical face (9) and the third conical face (404).
